Europäisches Patentamt

European Patent Office

Office européen des brevets

(11) Publication number: **0 182 494**
**B1**

(12) **EUROPEAN PATENT SPECIFICATION**

(45) Date of publication of patent specification: **23.01.91**

(21) Application number: **85307391.4**

(22) Date of filing: **15.10.85**

(51) Int. Cl.⁵: **G 02 B 6/44**

(54) Optical communication system.

(30) Priority: **15.10.84 GB 8426008**
**24.07.85 GB 8518694**

(43) Date of publication of application:
**28.05.86 Bulletin 86/22**

(45) Publication of the grant of the patent:
**23.01.91 Bulletin 91/04**

(84) Designated Contracting States:
**AT BE CH DE FR IT LI NL SE**

(56) References cited:
**DE-A-3 133 586**
**FR-A-2 517 076**
**FR-A-2 517 077**
**GB-A-2 058 396**
**JP-A-5 840 509**
**US-A-4 266 583**
**US-A-4 418 982**

**PATENTS ABSTRACTS OF JAPAN, vol. 7, no. 220 (P-226) 1365r, 30th September 1983; & JP - A - 58 113 904**

**PATENTS ABSTRACTS OF JAPAN, vol. 7, no. 121 (P-199) 1266r, 25th May 1983; & JP - A - 58 40 509**

(73) Proprietor: **Telephone Cables Limited**
**Chequers Lane**
**Dagenham Essex RM9 6QA (GB)**

(72) Inventor: **Smoker, John Victor**
**9 Risborough Close Muswell Hill**
**London N10 (GB)**
Inventor: **George, Edward Kitchener**
**93 Nelson Road**
**South Hornchurch Essex (GB)**
Inventor: **Jung, Roger Erwin**
**38 Tufton Road Chingford**
**London E4 8LE (GB)**

(74) Representative: **Kirby, Harold Victor Albert**
**Central Patent Department Wembley Office The General Electric Company, p.l.c. Hirst Research Centre East Lane**
**Wembley Middlesex HA9 7PP (GB)**

## Description

This invention relates to optical communication systems of the type comprising a main optical fibre cable having a plurality of optical fibres within a protective cover and in which fibres of the cable are joined to other fibres within a connection housing.

It has been proposed in JP—A—58-40509 to provide for optical fibre cables a terminal box into which an end of an optical fibre cable extends and is connected to one or more further optical cables which emerge from the box, a surplus length of cable being provided within the housing for facilitating splicing of the fibres of the cables.

FR—A—2517076 also discloses apparatus for connecting an end of an optical fibre cable to individual optical fibres, incorporating a plurality of trays having drums around which the fibres are wound, to provide surplus lengths of fibres within the trays to facilitate splicing of the fibres.

However in some cases an optical fibre cable is required to be accessed by spur cables at spaced points along its length.

When such access points are known at the time of laying the main cable, no problem arises since allowance can be made for the extra length of cable required for making the connections. However, if, at a future date, further connections are necessary, it could be found that the main cable does not have enough slack to allow the connections to be made.

Accordingly, the present invention provides an optical communication system incorporating a main optical fibre cable having a plurality of optical fibres within a protective cover, and at least one connection housing for allowing access to an intermediate length of the cable distal from its ends, the or each connection housing having an inlet and an outlet for the main cable, which is looped around within the housing so as to provide an excess length of cable within the housing, and at least one access port through which a spur cable is passed into the housing and connected to the main cable, said cable housing being provided with fittings for connecting one or more fibres of the main cable to the respective fibre or fibres of the spur cable, characterised in that the main cable within the housing is stripped of its protective cover, and that at least some of the fibres of said excess length of cable pass unbrokenly between the inlet and outlet of the housing so as to extend in a continuous and uninterrupted manner between the inlet and outlet regions of the main cable. The connection housing conveniently incorporates a plurality of trays, each arranged to accommodate excess lengths of optical fibres and each of which is movable in relation to the others to facilitate access to it.

Preferably there is a plurality of said connection housings provided at spaced intervals along the length of the cable.

Preferably also, any access port of the housing not in use is closed off by a removable cover.

Such fittings may comprise means for allowing access to individual fibres in each of the main and spur cables as required, means for connecting the fibres of the main cable to those of the spur cable as required, and means for storing any excess length of fibre.

Preferably said excess length of cable provided within each housing is at least two metres and may be more, so as to give sufficient length to allow several connections to be made if desired.

The trays to accommodate the fibres may be in the form of a stack of superposed drawers, each of which is withdrawable from the stack.

Two embodiments of the invention will now be described by way of example with reference to Figures 1 to 4 of the accompanying drawings, in which

Figure 1 illustrates a perspective view of part of one form of housing for use in an optical communication system in accordance with the invention,

Figures 2 and 3 represent a perspective view and a side view respectively of an alternative form of housing for use in such an optical communication system, and

Figure 4 represents a plan view of part of the housing.

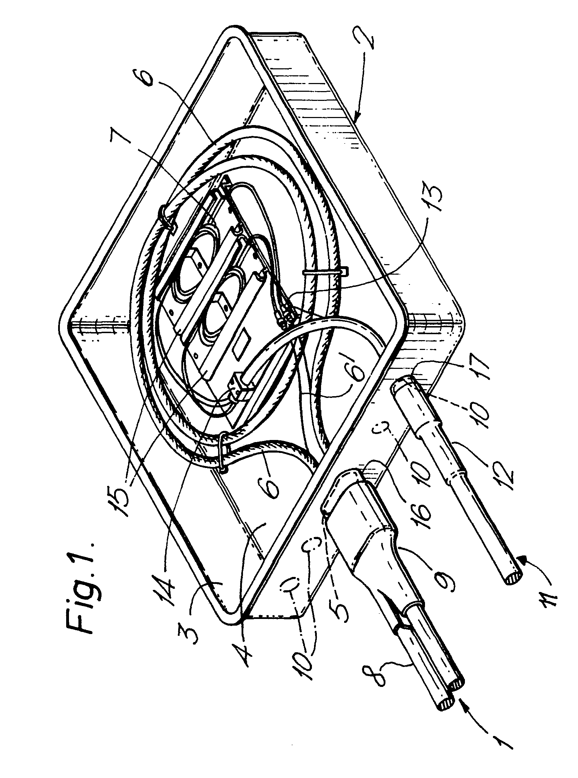

Referring first to Figure 1, in order to allow access to a main optical cable 1 which forms part of an optical communications system, several connection housings 2, one of which is shown in the drawings, are provided at spaced intervals along the length of the cable 1.

The connection housing 2, which comprises four walls 3, a base 4 and a removable lid (not shown), has an inlet/outlet cable port 5 in one of the walls 3 for the main cable 1, the cable port being fitted with a tubular projection 16 through which the cable passes. In this embodiment, the cable 1 is of the type in which a plurality of tubes 6, e.g. sixteen, each containing several fibres 7, e.g. ten, are stranded together within a protective sheath 8. The entry and exit of the cable to and from the cable port 5 is kept free of contamination by covering the projection and adjacent part of the cable sheath with a heat-shrinkable sleeve 9 such as are well known in the art.

When the cable 1 enters the housing 2, it is looped round the housing several times to provide an excess length of cable, e.g. two metres, within the housing and is then led out again via the cable port 5, the part of the cable within the housing being stripped of its protective sheath 8 so as to expose the stranded tubes 6.

The housing is also provided with a number of access ports 10 in the walls 3, four being shown in the drawings. These access ports 10 are closed off by the wall of housing extending over them until such time as it is required to connect a spur cable 11 to the main cable 1, when the part of the wall closing off the access port is removed to allow the spur cable 11 to be passed into the housing 2 as is shown in the drawings for one of the access ports. The spur cable 11 may incorporate any number of fibres, e.g. between ten and eighty fibres, and may be of any desired construction.

Such a spur cable 11 is passed through a tubular projection 17 fitted to the access port 10 and the projection and adjacent part of the cable are covered by a heat-shrinkable sleeve 12 in a similar manner to that of the main cable 1 as described above, the end of the spur cable 11 within the housing being clamped by a clamp 14.

In order to make the connection between the fibres 7 from the main cable 1 and the spur cable 11, the requisite number of tubes 6 are unravelled from the main cable 1 as at 6' and are passed to manifolds 13. In the case of the embodiment as illustrated this is only done for one tube having up to ten optical fibres 7. At this point the tube 6' is broken into, allowing the optical fibres 7, only some of which are shown, to be passed through the manifold 13, to a respective organiser tray 15 as shown, where the fibres are joined to the fibres of the spur cable which have similarly been passed from the clamp 14 via a manifold (not shown) to the organiser tray 15.

Any fibres not connected at this time are stored in the organiser tray and may be connected at a later date if desired.

As will be appreciated, further cable connections are also possible at later times due to the other access ports provided and a system according to the invention thus provides means whereby many connections may be made to a cable after it has been laid.

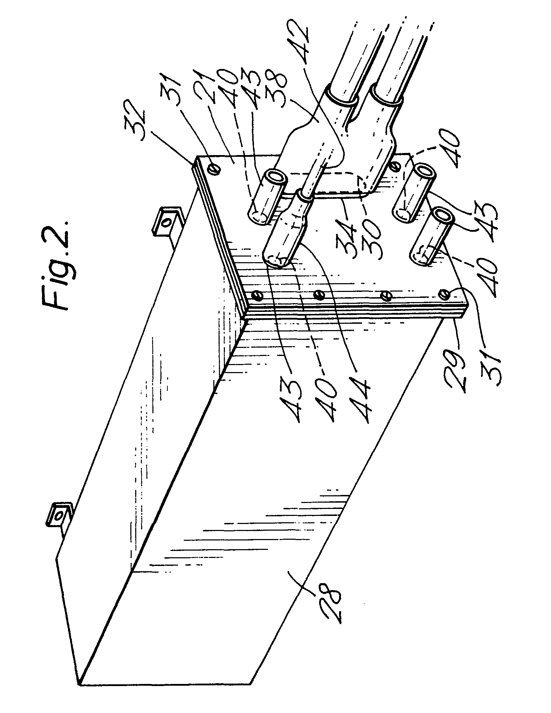

An alternative form of housing for use in a communication system in accordance with the invention is illustrated in Figures 2 to 4.

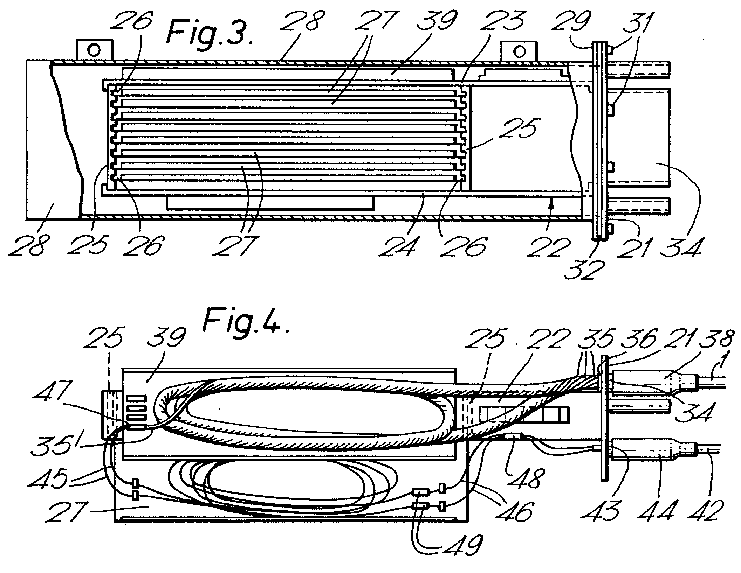

The housing incorporates an inner unit comprising a frame 22 having upper and lower plates 23, 24 fixed to an end plate 21, and supporting between them two spaced tray supports 25 which are provided on their inner surfaces with a plurality of horizontally-extending grooves 26. Each corresponding pair of grooves supports between them a respective organiser tray 27 which can be slid out sideways from the stack of trays as shown in Figure 4.

The frame/organiser tray assembly is arranged to be accommodated in a rectangular metal enclosure 28 (Figs. 2 and 3). The enclosure has one open end and the frame/organiser tray assembly is introduced into the enclosure by sliding it in from the open end. The enclosure is provided, around the open end with an outwardly directed flange 29 to which the end plate 21 of the inner unit is arranged to be secured, as by screws 31, a gasket between the end plate and the flanges providing a moisture-proof seal.

The end plate 21 of the inner unit has a cable port 30 for the main cable 1 in the form of an elongate opening surrounded on the external face of the plate with a tubular cross-section of a corresponding cross-section. The cable, as in the first embodiment, also consists of a plurality of tubes 35 stranded together in a protective sheath 36 and each accommodating several optical fibres.

Within the enclosure 28 the cable 1 is stripped of its protective sheath 36 so as to expose the stranded tubes 35, is looped around a tray 39 fixed to the top of the upper frame plate 23, as shown in Figure 4, to provide an excess length of cable for forming connections to one or more spur cables as will subsequently be described. The cable then passes out of the enclosure through the same cable port.

To prevent the entry of moisture into the enclosure 28 the projection 34 and the adjacent parts of the cable sheath 36 are covered by a heat-shrinkable sleeve 38.

The end plate 21 is also provided with a number of access ports 40, for example four as shown in Figure 2, by which spur cables, as required, may enter the enclosure 28, each access port 40 being surrounded on the outside of the end plate 21 by a tubular projection 43, and where a spur cable, as at 42, enters the enclosure the respective projection and adjacent part of the cable are enclosed by a heat-shrinkable sleeve 44. The projections 43 of those access ports 40 which are not used are enclosed by a close-ended heat-shrinkable sleeve (not shown).

In order to make a connection between fibres 45 from the main cable 1 and fibres 46 from a spur cable 42, the inner unit incorporating the frame/organiser tray assembly is first withdrawn from the enclosure 28. The requisite number of tubes 35 (only one of which is shown at 35') are unravelled from the unsheathed part of the main cable 1 and passed to a manifold 47. The tubes are then broken into and fibres 45 from them led from the manifold to one or more of the organiser trays 27. Fibres 46 from the spur cable 42 are similarly passed to the respective organiser trays via a manifold shown at 48. Connections are made between the fibres 45 of the main cable 1 and the spur cable fibres 46 by means of any suitable form of connector, shown diagrammatically at 49 in Figure 4.

Any excess lengths of fibres, and those fibres not employed, are looped several times around the respective organiser trays, and the fibres not connected at this time may be connected at a later date if required. The excess length of cable and fibres facilitates the making of the connections as and when desired, and as in the first embodiment the housing provides means enabling many connections to be made to a cable after the cable has been laid.

**Claims**

1. An optical communication system incorporating a main optical fibre cable (1) having a plurality of optical fibres within a protective cover and at least one connection housing (2) for allowing access to an intermediate length of the cable distal from its ends, the or each connection housing having an inlet and an outlet for the main cable, which is looped around within the housing so as to provide an excess length of cable within the housing, and at least one access port (10) through which a spur cable (11) is passed into the housing and connected to the main cable, said cable housing being provided with fittings for connecting one or more fibres of the main cable to the respective fibre or fibres of the spur cable, characterised in that the main cable within the housing is stripped of its protective cover and that at least some of the fibres of said excess length of cable pass unbrokenly between the inlet and outlet of the housing so as to extend in a continuous and uninterrupted manner between the inlet and outlet regions of the main cable.

2. An optical communication system according to Claim 1 wherein any access port (10) of the housing not in use is closed off by a removable cover.

3. A communication system according to Claim 1 or 2 wherein said fittings comprise means for allowing access to individual fibres in each of the main and spur cables as required, means for connecting the fibres of the main cable to those of the spur cable as required, and means for storing any excess length of fibre.

4. A communication system according to any preceding Claim wherein said excess length of cable provided within the housing is at least two metres.

5. A communication system according to any preceding Claim wherein the connection housing incorporates a plurality of trays each arranged to accommodate excess lengths of optical fibres and each of which is movable in relation to the others to facilitate access to it.

6. A communication system according to Claim 5 wherein the trays are in the form of a stack of superposed drawers, each of which is withdrawable from the stack.

7. An optical communication system according to any preceding Claim incorporating a plurality of said connection housings provided at spaced intervals along the length of the cable.

**Patentansprüche**

1. Optisches Übertragungssystem, einschließend ein Hauptlichtleiterkabel (1), welches mehrere Lichtleitfasern innerhalb einer Schutzhülle aufweist, und zumindest ein Anschlußgehäuse (2) zur Ermöglichung eines Zugriffs auf einen von den Kabelenden fernen Zwischenlängenabschnitt des Kabels, wobei das oder die Anschlußgehäuse einen Einlaß und einen Auslaß für das Hauptkabel aufweisen, das innerhalb des Gehäuses schlaufenartig herumgelegt ist, um so eine überschüssige Kabellänge innerhalb des Gehäuses bereitzustellen, und zumindest eine Zugriffsöffnung (10) aufweisen, durch die ein kurzes Abzweigkabel (11) in das Gehäuse geführt und mit dem Hauptkabel verbunden ist, wobei das Kabelgehäuse mit Anschlußstücken zum Anschließen eines oder mehrerer Fasern des Hauptkabels an die jeweilige oder jeweiligen Fasern des Abzweigkabels versehen ist, dadurch gekennzeichnet, daß innerhalb des Gehäuses vom Hauptkabel dessen Schutzhülle abgestreift ist und daß zumindest einige der Fasern der überschüssigen Kaballänge zwischen Einlaß und Auslaß des Gehäuses ungebrochen verlaufen, so daß sie sich zwischen den Einlaß- und Auslaßbereichen des Hauptkabels in einer kontinuierlichen und ununterbrochenen Weise erstrecken.

2. Optisches Übertragungssystem nach Anspruch 1, in welchem jede nicht benutzte Zugriffsöffnung (10) des Gehäuses durch eine entfernbare Abdeckung abgeschlossen ist.

3. Übertragungssystem nach Anspruch 1 oder 2, in welchem die Anschlußstücke Einrichtungen zur Ermöglichung eines Zugriffs in der erforderlichen Weise auf die einzelnen Fasern in jedem, dem Haupt- und Abzweigkabel, Einrichtungen zum Anschließen der Fasern des Hauptkables an die des Abzweigkabels in der erforderlichen Weise und Einrichtungen zum Speichern jeder überschüssigen Faserlänge umfassen.

4. Übertragungssystem nach einem der vorhergehenden Ansprüche, in welchem die überschüssige, innerhalb des Gehäuses vorgesehene Länge zumindest zwei Meter beträgt.

5. Übertragungssystem nach einem der vorhergehenden Ansprüche, in welchem das Anschlußgehäuse mehrere Einsätze umfaßt, von denen jeder dazu ausgelegt ist, überschüssige Lichtleitfaserlängen aufzunehmen, und jeder in Bezug auf die anderen zur Erleichterung des Zugriffs auf ihn bewegbar ist.

6. Übertragungssystem nach Anspruch 5, in welchem die Einsätze in Form eines Stapels übereinander angeordneter Schubladen vorgesehen sind, von denen jede aus dem Stapel herausziehbar ist.

7. Optisches Übertragungssystem nach einem der vorhergehenden Ansprüche, einschließend mehrere derartiger Anschlußgehäuse, die in Abstandsintervallen entlang der Länge des Kabels vorgesehen sind.

**Revendications**

1. Système de communications optiques comprenant un câble principal (1) à fibres optiques ayant plusieurs fibres optiques disposées dans un revêtement protecteur et au moins un boîtier de connexion (2) destiné à donner accès à un tronçon intermédiaire du câble, distant de ses extrémités, le boîtier ou chaque boîtier de connexion ayant une entrée et une sortie destinées au câble principal, celui-ci formant une boucle dans le boîtier afin qu'il constitue un tronçon supplémentaire de câble dans le boîtier, et au moins un canal d'accès (10) par lequel un câble de ramification (11) pénètre dans le boîtier et peut être connecté au câble principal, le boîtier du câble ayant des embouts destinés à la connexion d'une ou plusieurs fibres du câble principal à une ou plusieurs fibres respectives du câble de ramification, caractérisé en ce que le câble principal placé dans le boîtier est démuni de son revêtement protecteur et en ce que certaines des fibres au moins du tronçon supplémentaire de câble passent sans être rompues entre l'entrée et la sortie du boîtier afin qu'elles soient disposées de façon continue et ininterrompue entre les régions d'entrée et de sortie du câble principal.

2. Système de communications optiques selon la revendication 1, dans lequel tout canal d'accès (10) du boîtier qui n'est pas utilisé est fermé par un revêtement amovible.

3. Système de communications selon la revendication 1 ou 2, dans lequel les embouts comprennent des dispositifs destinés à permettre l'accès à des fibres individuelles dans chacun des câbles principal et de ramification le cas échéant, un dispositif de connexion des fibres du câble principal à celles du câble de ramification le cas échéant, et un dispositif destiné à contenir l'excès de longueur de la fibre.

4. Système de communications selon l'une quelconque des revendications précédentes, dans lequel le tronçon supplémentaire de câble placé dans le boîtier a une longueur au moins égale à 2 m.

5. Système de communications selon l'une quelconque des revendications précédentes, dans lequel le boîtier de connexion comporte plusieurs plateaux disposés chacun afin qu'ils puissent loger les tronçons supplémentaires de fibres optiques et mobiles chacun par rapport aux autres afin que l'accès au plateau soit facilité.

6. Système de communications selon la revendication 5, dans lequel les plateaux sont sous forme d'un empilement de tiroirs superposés, chacun d'eux pouvant être retiré de l'empilement.

7. Système de communications optiques selon l'une quelconque des revendications précédentes, comprenant plusieurs boîtiers de connexion disposés à certains intervalles sur la longueur du câble.

Fig.1.

EP 0 182 494 B1

Fig.2.

EP 0 182 494 B1

Fig.3.

Fig.4.